# EUROPÄISCHE PATENTANMELDUNG

(11) **EP 2 062 837 A1**
(43) Veröffentlichungstag der Anmeldung: **27.05.2009**
(21) Anmeldenummer: 07022539.6
(22) Anmeldetag: 21.11.2007
(51) Int. Cl.: B65G 1/137, B66F 9/06

(54) **Verfahren zum Betreiben einer Flurförderanlage und Flurförderanlage**

(71) Anmelder: Universität Stuttgart, 70174 Stuttgart (DE)
(72) Erfinder: Vorwerk, Christian, 29227 Celle (DE); Wehking, Karl-Heinz, Prof. Dr. Ing., 70469 Stuttgart (DE)
(74) Vertreter: Bulling, Alexander

(57) **Zusammenfassung**

Verfahren zum Betreiben einer Flurförderanlage sowie eine Flurförderanlage mit mehreren gleichartigen, autonom betreibbaren Transporteinheiten, die untereinander kommunizieren, sich gegenseitig identifizieren und sich zu einem aus mehreren Transporteinheiten bestehenden Verbund zusammenschließen können und mit einer mit den Transporteinheiten kommunizierenden und die Transporteinheiten identifizierenden zentralen Leitstelle. Das Verfahren weist folgende Schritte auf:
a) Sammeln der abzuarbeitenden Aufträge in einem Auftragspool der Leitstelle mit wenigstens den Merkmalen Abholort und Lieferort der Ladung, sowie die sich daraus ergebende benötigte Anzahl der Transporteinheiten,
b) Auswählen und Annehmen eines Auftrags durch wenigstens eine freie Transporteinheit,
c) Fahren der wenigstens einen Transporteinheit zum Abholort,
d) Anfragen der wenigstens einen Transporteinheit bei der Leitstelle, ob die benötigte Anzahl von Transporteinheiten den Auftrag angenommen haben,
falls nein, Anfordern von wenigstens einer weiteren Transporteinheiten bei der Leitstelle und/oder durch direkte Kommunikation mit weiteren Transporteinheiten,
e) Aufnehmen der Ladung durch den Verbund der Transporteinheiten am Abholort und Verbringen der Ladung zum Lieferort,
f) Abladen der Ladung am Lieferort
g) Auflösen des Verbundes.

## Beschreibung

Die Erfindung betrifft ein Verfahren zum Betreiben einer Flurförderanlage sowie eine Flurförderanlage.

Aus der DE 87 08 900 U1 ist beispielsweise eine Flurförderanlage bekannt geworden, die längs einer Leitspur selbstfahrende Flurförderwagen aufweist. Die Flurförderfahrzeuge fahren folglich ausschließlich entlang den Leitspuren. Eine flexible und je nach Auftragslage abhängige Förderung von Stückgütern ist damit nicht, beziehungsweise nur bedingt, möglich.

Aus der DE 34 08 720 A1 ist ein gleisloses Flurfördersystem bekannt geworden, das Motorfahrzeuge mit Lenkantrieb sowie ein Leitsystem, das die einzelnen Fahrzeuge auf vorbestimmten Fahrspuren führt, umfasst. Das Leitsystem kann dabei mehrere ortsfeste Sender und einen auf jedem Fahrzeug installierten Empfänger beinhalten. Motorfahrzeugseitige Rechner können die fortlaufende Position des jeweiligen Fahrzeugs bestimmen und entsprechende Signale zur Steuerung eines Lenkantriebs erzeugen.

Heutige Flurförderanlagen zeichnen sich durch einen sehr anwendungsspezifischen Materialfluss aus. Nicht nur die Transporteinheiten, sondern auch die zugehörige Steuerungs- und Automatisierungstechnik sind dabei auf den jeweiligen Anwendungsfall der Distributions- und Produktionslogistik, also auf die dort vorkommenden, zu transportierenden Produkte bezogen. Die Förderanlagen werden dabei speziell an die Größe der zu transportierenden Produkte angepasst, wobei in der Regel unterschieden wird zwischen sogenannten Paketen oder Kleinladungsträgern (400x600 mm), Europaletten (800x1200 mm) oder Industriepaletten (1000x1200 mm). Selbstverständlich werden Förderanlagen auch für beliebig andere Güter mit beliebig anderen Abmessungen und den unterschiedlichsten Gewichtsklassen zur Verfügung gestellt.

Die Auswahl, welche Art der Fördertechnik Verwendung findet, wird folglich von den geometrischen Produktgrößen und den Lastklassen entschieden. Für Unstetigkeitsförderer stehen eine große Bandbreite von Transporteinheiten, wie beispielsweise Gabelstapler, Handhubwagen, Schwerlastanhänger und so weiter zur Verfügung.

Bei heutigen Materialflusssystemen, zum Beispiel bei der Hintereinanderschaltung von Stetigförderern, oder der Verwendung von n-Unstetigförderern, fällt der Materialfluss dann in der Anlage aus, wenn lediglich ein Stetigförderer ausfällt, oder wenn eine bestimmte Anzahl von Unstetigförderern parallel ausfallen und damit eine ausreichende Reservekapazität nicht mehr vorhanden ist.

Die Individualität der einzelnen zur Verwendung kommenden Förderanlagen zieht hohe Folgekosten bei der Montage, der Inbetriebnahme, der Wartung, der Instandsetzung, der Ersatzteilbeschaffung, der Rekonfiguration und der Erweiterung nach sich. Zudem kann die Versorgung mit Energien und Verlegung der Datenleitungen erst dann erfolgen, wenn alle Komponenten ihren endgültigen Stellplatz gefunden haben und ausgerichtet wurden. Auch bringen unterschiedliche Höhen und Breiten der einzelnen Transporteinheiten Schwierigkeiten bei der Aufstellung mit sich. Instandhaltungsmaßnahmen verteuern sich dadurch, dass eine umfangreiche Ersatzteillagerung und eine Abstimmung des Service-Teams der unterschiedlichen Komponentenhersteller vorgenommen werden muss.

Ändern sich beim Betrieb der Förderanlage die Anforderungen, müssen entsprechende kostenintensive Umbauten vorgenommen werden. Inbetriebnahmen von Flurförderanlagen nach deren Neubau und/oder nach deren Umbau, erfordern einen immensen Aufwand an Zeit und Kosten.

Der vorliegenden Erfindung liegt deshalb die Aufgabe zugrunde, eine Flurförderanlage bereitzustellen, mit der unterschiedlich große und/oder unterschiedlich schwere Ladungen möglichst schnell auf möglichst einfache Art und Weise an einem Abholort abgeholt und zu einem Lieferort verbracht werden können. Anpassungs- und Entwicklungszeiten sowie Anpassungs- und Entwicklungskosten sollen bei einer Änderung der Anforderung an das System möglichst gering sein.

Diese Aufgabe wird durch ein Verfahren mit den Merkmalen des Anspruchs 1 sowie durch eine Flurförderanlage mit den Merkmalen des Anspruchs 9 gelöst.

Ein derartiges Verfahren beziehungsweise eine derartige Flurförderanlage sieht folglich mehrere gleichartige, autonom arbeitende Transporteinheiten vor, die jeweils eine Energieversorgungseinheit, eine Antriebseinheit mit einer Lenkeinheit sowie eine Identifizierungseinheit und eine Kommunikationseinheit umfassen. Die Identifizierungseinheit und die Kommunikationseinheit sind dabei derart ausgebildet, dass die einzelnen Transporteinheiten untereinander kommunizieren können und sich gegenseitig identifizieren können. Zudem können die einzelnen Transporteinheiten sich zu einem mehreren Transporteinheiten bestehenden Verbund zusammenschließen. Ferner ist eine mit den Transporteinheiten kommunizierende und die Transporteinheiten identifizierende zentrale Leitstelle vorgesehen. Die Flurförderanlage wird dabei wie folgt betrieben:

Zunächst werden gemäß Schritt a) abzuarbeitende Förderaufträge in einem Auftragspool der Leitstelle gesammelt, wobei die Aufträge wenigstens folgende Kriterien beinhalten: Abholort und Lieferort der Ladung, Priorität der Lieferung, Abmessungen und Gewicht der Ladung sowie die sich daraus ergebende benötigte Anzahl der Transporteinheiten zur Durchführung des Transports der Ladung vom Abholort zum Lieferort.

In einem nächsten Schritt b) prüfen freie Transporteinheiten, die zum jeweiligen Zeitpunkt keinen Transportauftrag erledigen, die abzuarbeitenden Aufträge und wählen aus und nehmen an den Auftrag, dessen Abholort für sie gut erreichbar ist und/oder dessen Priorität der Lieferung Vorrang hat.

Nach dem Auswählen und der Annahme des Auftrags fährt die Transporteinheit dann selbstständig gemäß Schritt c) zum Abholort.

Die Transporteinheit frägt gemäß Schritt d) bei der Leitstelle und/oder bei anderen Transporteinheiten, mit denen sie in Kommunikation steht, nach, ob die benötigte Anzahl von Transporteinheiten den Auftrag angenommen haben. Falls ja, kommunizieren die den Auftrag angenommenen Transporteinheiten und schließen sich gemäß Schritt d1) zu einem Verbund zusammen. Werden noch Transporteinheiten benötigt, werden diese von der Transporteinheit bei der Leitstelle und/oder durch direkte Kommunikation mit weiteren Transporteinheiten gemäß Schritt d2) angefordert.

Steht der Verbund der benötigten Transporteinheiten am Abholort bereit, so wird gemäß Schritt e) die Ladung am Abholort aufgenommen. Ferner wird bestätigt, dass der Auftrag durchgeführt wird und dass die Ladung zum Lieferort verbracht wird.

Am Lieferort wird dann gemäß Schritt f) die Ladung abgeladen und es wird an die Leitstelle bestätigt, dass der Auftrag durchgeführt wurde.

Gemäß Schritt g) löst sich dann der Verbund der einzelnen Transporteinheiten auf und die einzelnen Transporteinheiten können aus dem Auftragspool weitere Lieferaufträge gemäß Schritt a) auswählen und annehmen.

Das erfindungsgemäße Verfahren hat den Vorteil, dass es sehr flexibel handhabbar ist. Je nach der Größe und des Gewichts der zu transportierenden Ladung werden entsprechend viele Transporteinheiten bereitgestellt. Transporteinheiten ohne Lieferauftrag können die Aufträge annehmen, die einen Abholort in ihrer Nähe haben beziehungsweise mit einer hohen Priorität versehen sind. Mit derartigen Förderanlagen können folglich unterschiedlichste Güter transportiert werden; Transporteinheiten können an verschiedenen Förderanlagen beliebig ausgetauscht werden. Zur Erhöhung der Transportkapazität können zusätzliche Transporteinheiten bereitgestellt werden. Aufgrund der Identifizierungskommunikation und der Leitfunktion können sich eine größere Anzahl von Transporteinheiten zusammenschließen und einen Schwarm bilden, wodurch eine Transportfunktion durch mehrere Transportelemente übernommen und realisiert wird. Die einzelnen Transporteinheiten können dabei autonom agieren und passen sich der Streckenstruktur, der Ladungsstruktur und der Auslastung der Fahrzeuge selbstständig an. Informationen können untereinander oder mit der Leitzentrale ausgetauscht werden, insbesondere hinsichtlich der Verkehrs- und Umweltsituation, der vorgegebenen Strecken, hinsichtlich Kollisionen, Ausweichmanöver und dergleichen. Eine Auslastung der einzelnen Transporteinheiten kann selbstständig geregelt werden. Je nach zu transportierendem Gut können die einzelnen Transporteinheiten beispielsweise nebeneinander und/oder hintereinander angeordnet werden.

Die beschriebene Flurförderanlage ist insgesamt auch sehr wirtschaftlich, da auch kleine Ladungen effizient transportiert werden können, insbesondere dann, wenn lediglich eine Transporteinheit hierfür Verwendung findet.

Im Vergleich zum bekannten Stand der Technik wird die Effizienz des Transportprozesses wesentlich gesteigert und es kann eine sehr hohe Verfügbarkeit des Gesamtsystems aufgrund des flexiblen Systemverhaltens mit dynamisch anpassbaren Ablaufstrategien garantiert werden. Die einzelnen Transporteinheiten können insbesondere einen vergleichsweise einfachen Aufbau aufweisen und damit vergleichsweise kostengünstig realisiert werden.

Vorteilhafterweise wird vor und/oder während der Durchführung von Schritt c) von der jeweiligen Transporteinheit überprüft, ob der Auftrag noch frei ist; falls ja, läuft das beschriebene Verfahren mit Schritt d) weiter; falls nein, wird ein anderer Auftrag ausgewählt und angenommen.

Ferner ist denkbar, dass vor und/oder während des Fahrens der Transporteinheit zum Abholort gemäß Schritt c) die jeweilige Transporteinheit überprüft, ob der Auftrag noch die Priorität hat und/oder ob neue Aufträge mit einer höheren Priorität vorliegen. Sollte dies der Fall sein, so kann der neu hinzugekommene, eine höhere Priorität aufweisende Auftrag angenommen werden. Liegen keine Aufträge mit einer höheren Priorität vor, so wird der angenommene Auftrag ausgeführt.

Gemäß der Erfindung ist auch denkbar, dass vor und/oder während des Fahrens der Transporteinheit zum Abholort die jeweilige Transporteinheit überprüft, ob die Energieversorgungseinheit genug Energie für die Durchführung des Auftrags bereitstellen kann. Falls dies der Fall ist, wird der Auftrag weiter abgearbeitet. Falls nicht, wird die Transporteinheit zu der nächstgelegenen Energieladestation gefahren.

Die Erfindung kann zudem vorsehen, dass vor und/oder während der Fahrt zum Abholort gemäß Schritt c) die jeweilige Transporteinheit überprüft, ob der direkte Weg vom jeweiligen Standort zum Abholort frei ist. Eine derartige Überprüfung kann insbesondere aufgrund von anderen Transporteinheiten hinterlegten Daten, die beispielsweise in der Leitstelle hinterlegt sind, erfolgen. Sollte ein Hindernis im direkten Weg zum Abholort vorhanden sein, so wird ein anderer Weg, der gegebenenfalls etwas länger ist, ausgewählt.

Eine weitere Ausbildung der Erfindung schlägt vor, dass vor und/oder während des Aufnehmens der Ladung geprüft wird, ob der direkte Weg vom Abholort zum Lieferort frei ist. Dies kann, wie bereits erläutert, durch Abgleich von Daten erfolgen, die insbesondere von anderen Transporteinheiten hinterlegt sind. Sollte der direkte. Weg nicht frei sein, so wird ein alternativer Weg ausgewählt.

Gemäß der Erfindung kann das Zusammenschließen mehrerer Transporteinheiten zu einem Verbund wenigstens teilweise bereits auf dem Weg zum Abholort erfolgen. Entscheidend ist, dass spätestens am Abholort vor dem Aufnehmen der Ladung ein vollständiger Verbund vorliegt.

Liegt ein wenigstens teilweiser Verbund vor, so kann gemäß der Erfindung vorgesehen sein, dass lediglich eine Transporteinheit die Steuerung der weiteren Transporteinheiten und die Kommunikation mit der Leitstelle übernimmt. Insbesondere die zuerst am Abholort ankommende Transporteinheit kann diese Leitfunktion übernehmen und Fahrbefehle an die weiteren Transporteinheiten, die den Zusammenschluss bilden, geben. Hierdurch wird insgesamt eine vereinfachte Kommunikation erreicht.

Eine erfindungsgemäße Flurförderanlage kann vorsehen, dass die einzelnen Transporteinheiten jeweils identische Abmessungen aufweisen und modular zu einem Verbund zusammenschließbar sind. Beim Zusammenschluss eines Verbundes sind die einzelnen Transporteinheiten dann insbesondere synchron zueinander ansteuerbar und unmittelbar aneinander angrenzend oder zueinander beabstandet angeordnet. Eine Kopplung der einzelnen Transporteinheiten zu einem Verbund kann dabei mechanisch und/oder rein steuerungstechnisch realisiert sein. Aufgrund einer synchronen Ansteuerung bewegen sich die Transporteinheiten im Verbund in die gewünschte, vorgegebene Richtung. Die einzelnen Transporteinheiten müssen dabei nicht zwingend mechanisch miteinander verbunden sein.

Die einzelnen Transporteinheiten weisen vorzugsweise auf ihrer Oberseite eine sich über die gesamte Oberseite erstreckende Ladefläche und auf ihrer Unterseite die Energieversorgungseinheit, die Antriebseinheit und die Lenkeinheit sowie die Identifizierungseinheit und die Kommunikationseinheit auf. Auf der Unterseite sind insbesondere drei Räder vorgesehen, von denen wenigstens eines von der Lenkeinheit lenkbar und/oder von der Antriebseinheit antreibbar ausgebildet ist. Denkbar ist, dass das Rad, dass lenkbar ist, auch von der Antriebseinheit antreibbar ausgebildet ist.

Weitere Einzelheiten und vorteilhafte Ausgestaltungen der Erfindung sind der weiteren Beschreibung zu entnehmen, anhand derer die in den Figuren dargestellten Ausführungsformen der Erfindung näher beschrieben und erläutert sind.

### Es zeigen:

- Figur 1: eine Draufsicht auf eine systematische Darstellung einer erfindungsgemäßen Flurförderanlage;
- Figur 2: ein Ablaufdiagramm, gemäß dem die erfindungsgemäße Flurförderanlage betrieben wird;
- Figur 3: eine Transporteinheit der Flurförderanlage; und
- Figur 4: vier zusammengeschlossene Transporteinheiten.

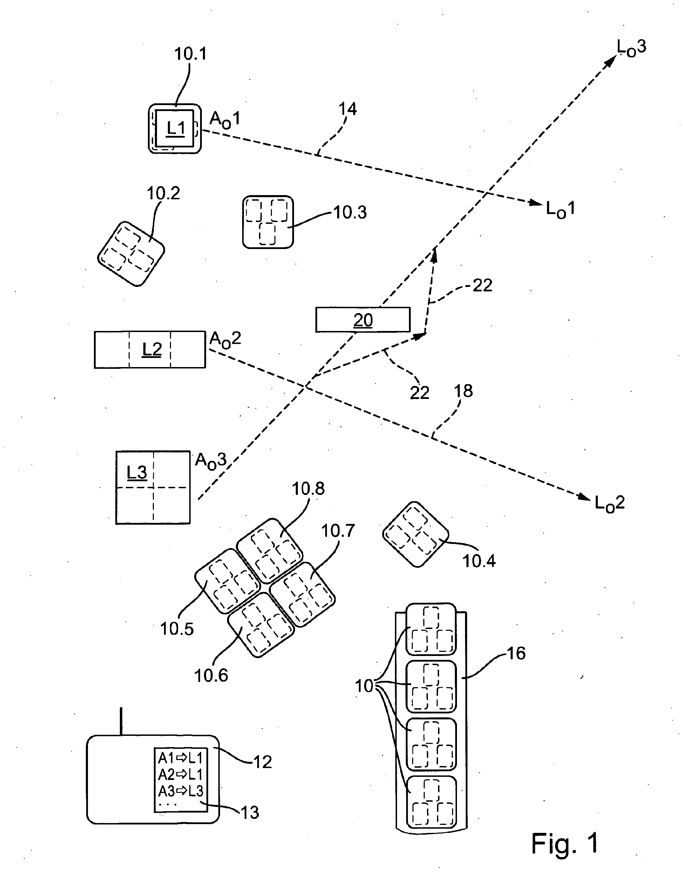

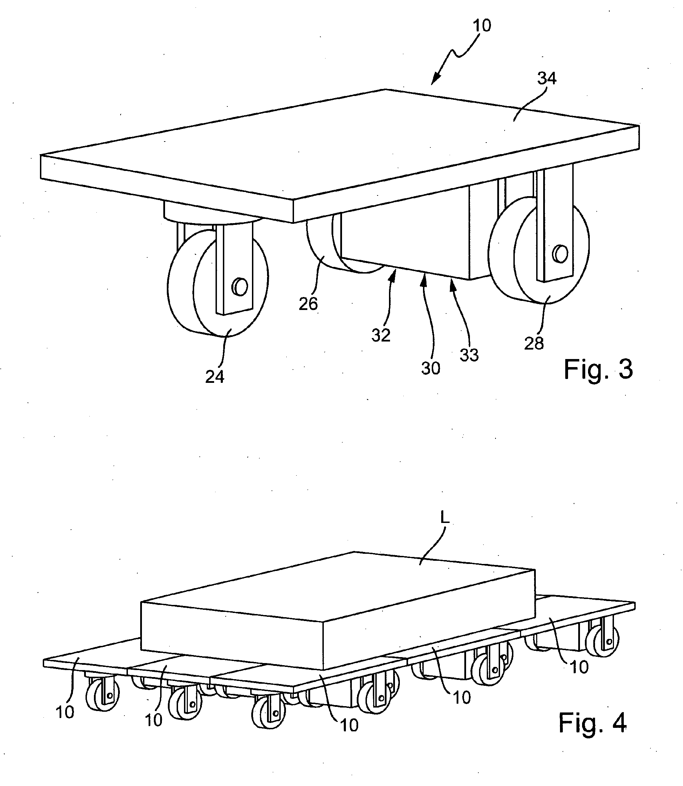

Die in der Figur 1 dargestellte Flurförderanlage umfasst eine Anzahl x von Transporteinheiten 10, wie sie in der Figur 3 dargestellt und in der zugehörigen Beschreibung näher beschrieben sind. Ferner ist eine zentrale Leitstelle 12 vorgesehen, die mit den einzelnen Transporteinheiten 10 kommuniziert. In der Leitstelle 12 sind in einem Auftragspool 13 abzuarbeitende Aufträge gesammelt. Die einzelnen Transporteinheiten sind so ausgebildet, dass sie nicht nur mit der Leitstelle 12, sondern auch miteinander kommunizieren können.

In der Figur 1 sind insgesamt drei Lieferungen L1, L2 und L3 von den jeweiligen Abholorten Aₒ1, Aₒ2 und Aₒ3 zu den zugehörigen Lieferorten Lₒ1, Lₒ2 und Lₒ3 zu transportieren. Neben den Abholorten und den Lieferorten sind in der Leitstelle 12 zudem die Abmessungen und das Gewicht der einzelnen Ladungen L1, L2 und L3 sowie deren Priorität hinterlegt. Aufgrund den Abmessungen und dem zugehörigen Gewicht ergibt sich die benötigte Anzahl von einzelnen Ladungsträgern 10, um die jeweilige Ladung aufnehmen zu können.

Die Ladung L1 ist vergleichsweise klein; um sie zu transportieren ist lediglich eine Transporteinheit 10.1 ausreichend. Die Ladung L2 ist länglicher Gestalt; für ihren Transport sind insgesamt drei hintereinander anzuordnende Transporteinheiten 10 erforderlich. Die Ladung L3 weist in Draufsicht einen rechteckigen Querschnitt auf; um sie zu transportieren sind vier Transporteinheiten 10 vorgesehen, zwei nebeneinander und zwei hintereinander.

Bei der in der Figur 1 dargestellten Zeitaufnahme befindet sich die Ladung L1 auf der Transporteinheit 10.1 am Abholort Aₒ1. Um den Lieferauftrag auszuführen, bewegt sich die Transporteinheit 10.1 entlang des Pfeils 14 auf direktem Weg zum Lieferort Lₒ1. Der Liefervorgang ist folglich bereits eingeleitet und die Transporteinheit 10 kann den Abholort Aₒ1 verlassen.

Um die Lieferung der Ladung L2 vom Abholort Aₒ2 zum Lieferort Lₒ2 durchzuführen, sind, wie bereits erwähnt, drei Transporteinheiten 10 erforderlich. Zu Beginn des Auftrags befindet sich dieser Auftrag im Auftragspool 13 und ist noch frei. Im Umfeld des Abholorts Aₒ2 befinden sich zwei Transporteinheiten 10.2 und 10.3. Aufgrund ihrer Nähe zum Abholort Aₒ2 entscheiden sich diese Transporteinheiten 10.2 und 10.3, den Auftrag anzunehmen. Da der Auftrag der Lieferung der Ladung L3 keine höhere Priorität als der Auftrag der Lieferung der Ladung L2 besitzt, stehen diese beiden Transporteinheiten 10.2 und 10.3 zur Durchführung des Auftrags der Lieferung der Ladung L2 zur Verfügung. Über bekannte Ortungssysteme ist den jeweiligen Transporteinheiten 10 ihre jeweilige Position bekannt. Über die zentrale Leitstelle 12 ist ihnen ebenfalls die Position der zu transportierenden Ladung L2 bekannt. Sofern keine Hindernisse im direkten Weg zum Abholort Aₒ2 vorhanden sind, bewegen sich die beiden Transporteinheiten 10.2 und 10.3 zum Abholort Aₒ2. Da eine weitere Transporteinheit 10.4 zum Transport der Lieferung L2 notwendig ist, wird diese entweder von den Transporteinheiten 10.2, 10.3 und/oder der Leitstelle 12 angefragt. Aufgrund der Anfrage verlässt die Transporteinheit 10.4 ein Transporteinheitenmagazin 16, in dem zur Verfügung stehende, keine Aufträge abarbeitende Transporteinheiten 10 untergebracht sind. Die Transporteinheiten 10.2, 10.3 und 10.4 fahren folglich zum Abholort Aₒ2, um die dortige Ladung L2 aufzunehmen. Während der Fahrt zur Lieferung L2 beziehungsweise spätestens am Abholort Aₒ2 schließen sich die Transporteinheiten 10.2, 10.3 und 10.4 hintereinander zusammen, so dass sie die Lieferung L2 vollständig aufnehmen können. Nach der Aufnahme der Ladung führen sie den Transportauftrag aus und bewegen sich entlang des Pfeils 18 zum Lieferort Lₒ2. Dabei übernimmt die Transporteinheit 10.2 die Kommunikation mit der Leitstelle 12 und steuert die beiden anderen Transporteinheiten 10.3 und 10.4 derart an, dass sich die Transporteinheiten 10.2, 10.3 und 10.4, die einen Schwarm bilden, derart synchron bewegen, dass die Ladung L2 sicher vom Abholort Aₒ2 zum Lieferort Lₒ2 verbracht wird.

Die Lieferung der Ladung L3 betreffend, arbeiten die Transporteinheiten 10.5 bis 10.8 den Lieferauftrag ab und bewegen sich bereits im zusammengeschlossenen Schwarm derart zum Abholort Aₒ3, dass sie die Geometrie der Lieferung L3 vollständig aufnehmen können. Auch hier übernimmt eine Transporteinheit 10.5 eine Leitfunktion und gibt Fahrbefehle an die anderen Transporteinheiten 10.6, 10.7 und 10.8. Nach dem Aufnehmen der Ladung L3 stellt die Transporteinheit 10.5 aufgrund der Leitstelle 12 bekannten Daten fest, dass sich auf dem direkten Weg vom Abholort Aₒ3 zum Lieferort Lₒ3 ein Hindernis 20 befindet. Aufgrund des Hindernisses 20 wird ein Umweg entlang der Pfeile 22 um das Hindernis 20 gewählt.

Sollte sich beim Anfahren des Verbundes, bestehend aus den Transporteinheiten 10.5, 10.6, 10.7 und 10.8 zum Abholort Aₒ3 herausstellen, dass ein weiterer Transportauftrag mit einer sehr hohen Priorität ansteht, so kann, je nachdem, ob andere Transporteinheiten 10 zum Abarbeiten des Auftrags mit hoher Priorität zur Verfügung stehen, der Fall eintreten, dass die Transporteinheiten 10.5, 10.6, 10.7 und 10.8 aufgrund der höheren Priorität des neuen Auftrags den bereits eingeleiteten Auftrag verwerfen und den neuen Auftrag mit hoher Priorität annehmen.

Beim Aufnehmen der Ladung wird bestätigt, dass der Auftrag durchgeführt wird. Anschließend wird die Ladung zum Lieferort gebracht. Nach dem Abladen der Ladung am Lieferort wird bestätigt, dass der Auftrag ausgeführt wurde. Ein zusammengeschlossener Verbund kann dann aufgelöst werden und die einzelnen Transporteinheiten stehen zur Annahme und Abarbeitung weiterer im Auftragspool vorhandener Aufträge zur Verfügung.

Vor Annahme eines Auftrags prüfen die einzelnen Transporteinheiten 10, ob ihre Energieversorgungseinheiten ausreichend Energie zur Verfügung stellen, um den Auftrag durchführen zu können und die jeweilige Ladung vom Abholort zum Lieferort zu transportieren. Sollte nicht ausreichend Energie zur Abarbeitung eines Auftrags vorhanden sein, so steuert die jeweils getroffene Transporteinheit eine Energieladestation, die beispielsweise im Magazin 16 vorgesehen sein kann, an.

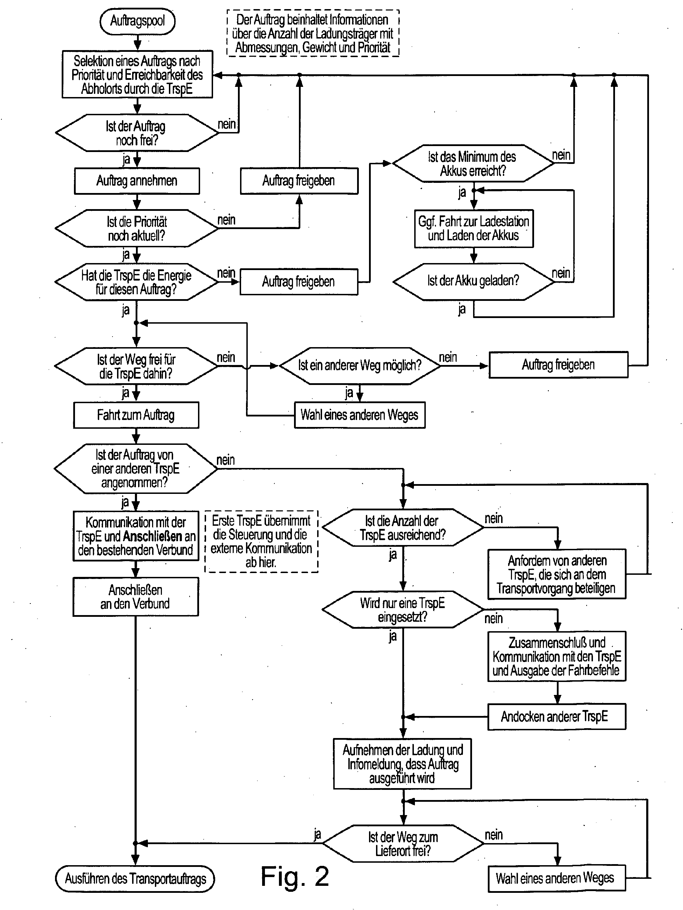

Figur 2 gibt ein Ablaufdiagramm wieder, gemäß dem Aufträge aus dem Auftragspool der Leitstelle 12 von einzelnen Ladungsträgern angenommen beziehungsweise verworfen werden.

### Gemäß Figur 2 wird wie folgt vorgegangen:

Im Auftragspool werden die abzuarbeitenden Aufträge gesammelt. Merkmale der einzelnen Aufträge die hinterlegt sind, sind insbesondere Abholort und Lieferort der Ladung, Priorität der Lieferung, Abmessung und Gewicht der Ladung und die sich daraus ergebende benötigte Anzahl von Transporteinheiten.

Die einzelnen frei zur Verfügung stehenden Transporteinheiten 10 wählen einen Auftrag nach der Priorität und nach der Erreichbarkeit des Abholorts durch die jeweilige Transporteinheit aus. Nach dem Auswählen wird angefragt, ob der Auftrag noch frei ist. Wenn ja, wird der Auftrag angenommen, wenn nein, wird ein neuer Auftrag ausgewählt.

Nach dem Annehmen des Auftrags wird bei der Leitstelle nachgefragt, ob die Priorität des Auftrags noch aktuell ist oder ob zwischenzeitlich neue Aufträge mit höherer Priorität vorliegen. Sollte dies der Fall sein, so wird der bereits angenommene Auftrag freigegeben und der Auftrag mit höherer Priorität angenommen.

Ist die Priorität noch aktuell, so überprüft die Transporteinheit, ob genügend Energie zur Ausführung des Auftrags vorhanden ist. Sollte dies nicht der Fall sein, so wird der Auftrag freigegeben und eine Ladestation zur Ladung der Energieversorgungseinheit angefahren.

Ist genug Energie zur Erledigung des Auftrags vorhanden, so wird geprüft, ob der direkte Weg zum Abholort frei ist. Sollte dies der Fall sein, so fährt die jeweilige Transporteinheit 10 zum jeweiligen Abholort. Sollte dies nicht der Fall sein, so wird nach einem alternativen Weg gesucht. Sollte kein Weg gefunden werden, beispielsweise weil die jeweilige Transporteinheit unüberwindbare Hindernisse zum Abholort erkennt, so wird der Auftrag freigegeben.

Ansonsten bewegt sich die jeweilige Transporteinheit zum Abholort. Insbesondere dann, wenn mehrere Transporteinheiten zum Transportieren der Lieferung erforderlich sein sollten, wird angefragt, ob weitere Transporteinheiten bereits den Auftrag angenommen haben. Sollte dies der Fall sein, so schließen sich die Transporteinheiten, die den Auftrag angenommen haben und zum Transport der Ladung erforderlich sind, zu einem Verbund zusammen. In der Regel wird die Transporteinheit, die als erste am Abholort angelangt, eine Leitfunktion übernehmen und die restlichen Transporteinheiten steuern. Ist der Verbund vollständig, so kann die jeweilige Ladung, beispielsweise durch Handhabungseinheiten, wie Roboter, aufgenommen werden und dann mittels den Transporteinheiten vom Abholort zum jeweiligen Lieferort verbracht werden. Sollte die Anzahl der benötigten Transporteinheiten nicht ausreichend sein, so werden weitere Transporteinheiten entweder über die Leitstelle oder durch direkte Kommunikation mit anderen Transporteinheiten angefordert. Beim oder vor dem Transportieren der jeweiligen Ladung zum Lieferort wird überprüft, ob Informationen vorliegen, gemäß denen der direkte Weg zum Lieferort nicht frei ist. Sollte dies der Fall sein, so wird ein alternativer Weg gewählt. Nach Abladen der Ladung am Lieferort, beispielweise mittels Handhabungsgeräten, wie Robotern, wird bestätigt, dass der Auftrag ausgeführt wurde. Der Verbund kann dann aufgelöst werden, wobei die einzelnen Transporteinheiten dann für weitere Aufträge zur freien Verfügung stehen.

Die einzelnen Transporteinheiten 10 können beispielsweise wie in der Figur 3 dargestellt, ausgebildet sind. Sie können drei Räder 24, 26, 28 vorsehen, wobei das Rad 24 über eine nicht separat dargestellte Lenkeinheit steuerbar und beispielsweise die Räder 26 und 28 über eine Antriebseinheit 30 antreibbar sind. Zudem ist eine Kommunikationseinheit und Identifizierungseinheit 32 vorgesehen, mit der die einzelnen Transporteinheiten 10 untereinander und mit der Leitstelle 12 kommunizieren können. Die Oberseite der einzelnen Transporteinheiten 10 bilden eine Ladefläche 34 zur Aufnahme der jeweiligen Ladung. Ferner ist eine Energieversorgungseinheit 33 vorgesehen.

In der Figur 4 ist die Situation dargestellt, in der insgesamt neun Transporteinheiten 10 zusammengeschlossen sind. Ein derartiger Schwarm von Transporteinheiten kann eine in der Figur 4 dargestellte Ladung L mit einer entsprechenden Größe und einem entsprechenden Gewicht vom Abholort zum Lieferort transportieren. Die Ansteuerung der insgesamt neun Transporteinheiten erfolgt dabei vorzugsweise zentral von einer Transporteinheit, die die Leitfunktion übernimmt.

Beim Zusammenschließen der einzelnen Transporteinheiten 10 sind diese einander benachbart angeordnet, ohne dass diese mechanisch miteinander verbunden sind. Es ist zwar erfindungsgemäß denkbar, dass eine mechanische Kopplung benachbarter Fördereinheiten vorgesehen ist; zwingend erforderlich ist sie nicht, solange gewährleistet wird, dass die einzelnen Transporteinheiten 10 synchron zueinander angesteuert werden.

Die beschriebene Flurförderanlage hat den Vorteil, dass sie sehr flexibel und universell einsetzbar ist. Nahezu beliebige Arten von Gegenständen können als Ladung transportiert werden, wobei eine unterschiedliche Anzahl von Transporteinheiten 10 in unterschiedlicher Konfiguration Verwendung finden können. Um die Kapazität der Anlage zu erhöhen, können zusätzliche Transporteinheiten zum Einsatz kommen. Sollten einzelne Transporteinheiten ausfallen, so können diese auf einfache Art und Weise durch entsprechende Transporteinheiten ersetzt werden.

## Patentansprüche

1. Verfahren zum Betreiben einer Flurförderanlage mit mehreren gleichartigen, autonom betreibbaren Transporteinheiten (10), die jeweils eine Energieversorgungseinheit (33), eine Antriebseinheit (30) mit einer Lenkeinheit sowie eine Identifizierungseinheit (32) und eine Kommunikationseinheit (32) derart umfassen, dass die einzelnen Transporteinheiten (10) untereinander kommunizieren, sich gegenseitig identifizieren und sich zu einem aus mehreren Transporteinheiten (10) bestehenden Verbund zusammenschließen können und mit einer mit den Transporteinheiten (10) kommunizierenden und die Transporteinheiten (10) identifizierenden zentralen Leitstelle (12), mit folgenden Schritten:
a) Sammeln der abzuarbeitenden Aufträge in einem Auftragspool der Leitstelle (12) mit wenigstens den Merkmalen Abholort (Aₒ) und Lieferort (Lₒ) der Ladung (L), Priorität der Lieferung, Abmessung und Gewicht der Ladung (L) sowie die sich daraus ergebende benötigte Anzahl der Transporteinheiten (10),
b) Auswählen und Annehmen eines Auftrags durch wenigstens eine freie Transporteinheit (10) nach den Kriterien der Erreichbarkeit des Abholortes (Aₒ) durch die Transporteinheit (10) und/oder der Priorität der Lieferung,
c) Fahren der wenigstens einen Transporteinheit (10) zum Abholort (Aₒ) ,
d) Anfragen der wenigstens einen Transporteinheit (10) bei der Leitstelle (12) und/oder anderen Transporteinheiten (10), ob die benötigte Anzahl von Transporteinheiten (10) den Auftrag angenommen haben,
d1) falls ja: Kommunizieren mit den Transporteinheiten (10), die den Auftrag ebenfalls angenommen haben und Zusammenschließen zu einem Verbund,
d2) falls nein, Anfordern von wenigstens einer weiteren Transporteinheiten (10) bei der Leitstelle und/oder durch direkte Kommunikation mit weiteren Transporteinheiten (10), dann nochmals Durchführen von Schritt d),
e) Aufnehmen der Ladung (L) durch den Verbund der Transporteinheiten (10) am Abholort (Aₒ), Bestätigen, dass Auftrag durchgeführt wird und Verbringen der Ladung (L) zum Lieferort (Lₒ),
f) Abladen der Ladung (L) am Lieferort (Lₒ) und Bestätigung an die Leitstelle (12), dass der Auftrag ausgeführt wurde,
g) Auflösen des Verbundes und Auswählen und Annehmen weiterer Aufträge durch die einzelnen Transporteinheiten (10) gemäß Schritt b).

2. Verfahren nach Anspruch 1, **dadurch gekennzeichnet, dass** vor und/oder während der Durchführung von Schritt c) die jeweilige Transporteinheit (10) überprüft, ob der Auftrag noch frei ist; falls ja, weiter mit Schritt d), falls nein, Auswählen und Annehmen weiterer Aufträge durch die Transporteinheit (10) gemäß Schritt b).

3. Verfahren nach Anspruch 1 oder 2, **dadurch gekennzeichnet, dass** vor und/oder während der Durchführung von Schritt c) die jeweilige Transporteinheit (10) überprüft, ob der Auftrag noch die Priorität hat und/oder ob neue Aufträge mit einer höheren Priorität vorliegen; falls nein, weiter mit Schritt d), falls ja, Auswählen und Annehmen des neuen Auftrags durch die Transporteinheit (10) gemäß Schritt b) .

4. Verfahren nach Anspruch 1, 2 oder 3, **dadurch gekennzeichnet, dass** vor und/oder während der Durchführung von Schritt c) die jeweilige Transporteinheit (10) überprüft, ob die Energieversorgungseinheit (33) genug Energie für die Durchführung des Auftrags bereitstellen kann; falls ja, weiter mit Schritt d), falls nein, Fahren zu einer Energieladestation.

5. Verfahren nach wenigstens einem der vorhergehenden Ansprüche, **dadurch gekennzeichnet, dass** vor und/oder während der Durchführung von Schritt c) die jeweilige Transporteinheit (10) überprüft, ob der direkte Weg vom jeweiligen Standort zum Abholort (Aₒ) frei ist; falls nein, Auswählen eines anderen Wegs.

6. Verfahren nach wenigstens einem der vorhergehenden Ansprüche, **dadurch gekennzeichnet, dass** vor und/oder während der Durchführung von Schritt e) die jeweilige Transporteinheit (10) überprüft, ob der direkte Weg vom Abholort (Aₒ) zum Lieferort (Lₒ) frei ist; falls nein, Auswählen eines anderen Wegs.

7. Verfahren nach wenigstens einem der vorhergehenden Ansprüche, **dadurch gekennzeichnet, dass** das Zusammenschließen mehrerer Transporteinheiten gemäß Schritt d1) auf dem Weg zum Abholort (Aₒ) und/oder am Abholort (Aₒ) erfolgt.

8. Verfahren nach wenigstens einem der vorhergehenden Ansprüche, **dadurch gekennzeichnet, dass** während und/oder nach der Durchführung von Schritt d1) lediglich eine Transporteinheit (10) die Steuerung der weiteren Transporteinheiten (10) und die Kommunikation mit der Leitstelle (12) übernimmt.

9. Flurförderanlage mit mehreren gleichartigen, autonom betreibbaren Transporteinheiten (10), die jeweils eine Energieversorgungseinheit (33), eine Antriebseinheit (30) mit einer Lenkeinheit sowie eine Identifizierungseinheit (32) und eine Kommunikationseinheit (32) derart umfassen, dass die einzelnen Transporteinheiten (10) untereinander kommunizieren, sich gegenseitig identifizieren und sich zu einem aus mehreren Transporteinheiten (10) bestehenden Verbund zusammenschließen können und mit einer mit den Transporteinheiten (10) kommunizierenden und die Transporteinheiten (10) identifizierenden zentralen Leitstelle (12), wobei die Transporteinheiten (10) und die Leitstelle (12) so ausgebildet sind, dass sie zur Durchführung des Verfahrens nach wenigstens einem der vorhergehenden Ansprüche bestimmt sind.

10. Flurförderanlage nach Anspruch 9, **dadurch gekennzeichnet, dass** die einzelnen Transporteinheiten (10) jeweils identische Abmessungen aufweisen und modular zu einem Verbund zusammenschließbar sind.

11. Flurförderanlage mach Anspruch 9 oder 10, **dadurch gekennzeichnet, dass** beim Zusammenschluss eines Verbundes die einzelnen Transporteinheiten (10) synchron zueinander ansteuerbar sind und unmittelbar aneinander angrenzend oder zueinander beabstandet angeordnet sind.

12. Flurförderanlage nach Anspruch 9, 10 oder 11, **dadurch gekennzeichnet, dass** die einzelnen Transporteinheiten (10) auf ihrer Oberseite, eine sich über die gesamte Oberseite erstreckende Ladefläche (34) und auf ihrer Unterseite die Energieversorgungseinheit (33), die Antriebseinheit (30) und die Lenkeinheit sowie die Identifizierungseinheit (32) und die Kommunikationseinheit (32) aufweisen, wobei auf der Unterseite ferner drei Räder (24, 26, 28) vorgesehen sind, von denen wenigstens eines von der Lenkeinheit lenkbar und/oder von der Antriebseinheit (30) antreibbar ausgebildet ist.
